(19) Europäisches Patentamt
European Patent Office
Office européen des brevets

(11) **EP 1 869 620 B1**

(12) **EUROPÄISCHE PATENTSCHRIFT**

(45) Veröffentlichungstag und Bekanntmachung des Hinweises auf die Patenterteilung:
**18.08.2010 Patentblatt 2010/33**

(51) Int Cl.:
***G06K 9/00*** *(2006.01)*

(21) Anmeldenummer: **06724278.4**

(22) Anmeldetag: **12.04.2006**

(86) Internationale Anmeldenummer:
**PCT/EP2006/003371**

(87) Internationale Veröffentlichungsnummer:
**WO 2006/108633 (19.10.2006 Gazette 2006/42)**

(54) **VERFAHREN ZUR VERARBEITUNG VON BILD- UND VOLUMENDATEN AUF BASIS STATISTISCHER MODELLE**

METHOD FOR PROCESSING IMAGE AND VOLUME DATA BASED ON STATISTICAL MODELS

PROCEDE DE TRAITEMENT DE DONNEES-IMAGE ET DE DONNEES VOLUMIQUES SUR LA BASE DE MODELES STATISTIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.04.2005 DE 102005016955**

(43) Veröffentlichungstag der Anmeldung:
**26.12.2007 Patentblatt 2007/52**

(73) Patentinhaber: **Universität Tübingen
72074 Tübingen (DE)**

(72) Erfinder: **SCHILLING, Andreas
72810 Gomaringen (DE)**

(74) Vertreter: **Patentanwälte
Ruff, Wilhelm, Beier, Dauster & Partner
Postfach 10 40 36
70035 Stuttgart (DE)**

(56) Entgegenhaltungen:
**WO-A-2004/036500**

- **HILL, A.; THORNHAM, A.; TAYLOR, C. J.: "Model-Based Interpretation of 3D Medical Images" PROCEEDINGS OF THE BRITISH MACHINE VISION CONFERENCE, 23. September 1993 (1993-09-23), XP008068357 Guildford, Great Britan**

- **LÖTJÖNEN, J.; KIVISTÖ, S.; KOIKKALAINEN, J.; SMUTEK, D.; LAUERMA, K.: "Statistical shape model of atria, ventricles and epicardium from short- and long-axis MR images" MEDICAL IMAGE ANALYSIS, OXFORD UNIVERSITY PRESS, OXOFRD, GB, Bd. 8, Nr. 3, September 2004 (2004-09), Seiten 371-386, XP004533594 Netherlands ISSN: 1361-8415**
- **COOTES T F ET AL: "ACTIVE SHAPE MODELS- THEIR TRAINING AND APPLICATION" COMPUTER VISION AND IMAGE UNDERSTANDING, ACADEMIC PRESS, US, Bd. 61, Nr. 1, Januar 1995 (1995-01), Seiten 38-59, XP000978654 ISSN: 1077-3142**
- **COOTES T F ET AL: "USE OF ACTIVE SHAPE MODELS FOR LOCATING STRUCTURES IN MEDICAL IMAGES" IMAGE AND VISION COMPUTING, GUILDFORD, GB, Bd. 12, Nr. 6, Juli 1994 (1994-07), Seiten 355-365, XP009020099 ISSN: 0262-8856**
- **FLECK, S.; BIBER, P.; SCHILLING, A.: "Direct Estimation of Pose and Illumination - An Analysis by Synthesis Approach" PROCEEDINGS OF THE 7TH TÜBINGEN PERCEPTION CONFERENCE, [Online] 1. Februar 2004 (2004-02-01), - 1. Februar 2004 (2004-02-01) Seiten 66-66, XP007901057 Germany Gefunden im Internet: URL:http://www.kyb.mpg.de/publications/pdf s/pdf2575.pdf> [gefunden am 2006-09-01]**

• SCHILLING, A: "Introduction to Analysis by Synthesis Methods" PROCEEDINGS OF THE 8TH TÜBINGEN PERCEPTION CONFERENCE, [Online] 27. Februar 2005 (2005-02-27), - 27. Februar 2005 (2005-02-27) Seiten 22-22, XP007901058 Kirchentellinsfurt, Germany Gefunden im Internet: URL:http: //www.kyb.mpg.de/publications/pdf s/pdf3250.pdf> [gefunden am 2006-09-01]

**Beschreibung**

In der Medizin stehen verschiedene bildgebende Verfahren zur Verfügung, die innere Strukturen eines zu untersuchenden Körpers sichtbar machen. Seit langer Zeit gibt es Röntgenaufnahmen, die ein zweidimensionales Abbild der durchleuchteten Strukturen liefern, andere Verfahren, wie die (Computertomographie)CT- oder die (Magnetresonanz)MR-Tomographie können auch dreidimensionale, so genannte Voxeldatensätze liefern. Der Begriff Voxel setzt sich aus den Begriffen "Volumetric" und "Pixel" zusammen. Bei einem räumlichen Voxeldatensatz, der in diskretisierter Form in kartesischen Koordinaten vorliegt, entspricht ein Voxel einem zugehörigen diskreten Wert an einer XYZ-Koordinate des Datensatzes. Ein Voxel bildet folglich ein dreidimensionales Äquivalent eines Pixels. Üblicherweise handelt es sich bei den in einem Voxeldatensatz enthaltenen Daten um skalare Größen, beispielsweise um Intensitätswerte oder Farbwerte, die mit den Mitteln der Volumengrafik zur Visualisierung bestimmt sind.

Leider sind diese letztgenannten Verfahren heute noch teuer und zeitaufwendig oder auch (bei CT) mit höherer Strahlenbelastung verbunden. Daher werden oft, auch wenn - z.B. bei der Operationsplanung - dreidimensionale Aufnahmen wünschenswert wären, normale zweidimensionale Röntgenaufnahmen verwendet. Obwohl darin keine Tiefeninformationen enthalten sind, können Ärzte sich die abgebildeten dreidimensionalen Strukturen aufgrund ihrer Erfahrung vorstellen.

HILL, A.; THORNHAM, A.; TAYLOR, C.J.: "Model-Based Interpretation of 3D Medical Images" PROCEEDINGS OF THE 4TH BRITISH MACHINE VISION CONFERENCE, 23. September 1993 (1993-09-23), XP008068357 Guildford, Great Britain zeigt die Verwendung von so genannten Shape-Modellen, die ausschließlich die Positionen von Merkmalspunkten beschreiben.

FLECK, S.; BIBER, P.; SCHILLING, A.: "Direct Estimation of Pose and Illumination - An Analysis by Synthesis Approach" PROCEEDINGS OF THE 7TH TÜBINGEN PERCEPTION CONFERENCE, [Online] 1. Februar 2004 (2004-02-01), Seite 66 ff., XP007901057 Germany beschreibt einen allgemeinen Analysis-by-Synthesis-Ansatz in der Computer Vision im Kontext der Schätzung von Beleuchtungsrichtung und Lage und Ausrichtung von bekannten Objekten, der nicht auf einem statistischen Modell aus Beispiel-Voxeldatensätzen mit CT- und/oder MR-Voxeldaten beruht und keinen Bezug zur Rekonstruktion von 3D-Modellen enthält.

T.F. Cootes et al.: "Active Appearance Models", Lecture Notes in Computer Sciene (LNSC), H. Burkhardt, B. Neumann (Eds.), Vol. 1407, pp. 484-498, Springer Verlag, 1998, XP2493470 beschreibt das Berechnen von parametrisierten statistischen 2D-Modellen.

D. Rueckert, A.F. Frangi, J.A. Schnabel: "Automatic Construction of 3-D Statistical Deformation Models of the Brain Using Nonrigid Registration" erschienen in: IEEE Transactions on Medical Imaging, Vol. 22, No. 8, August 2003 beschreibt das Berechnen von parametrisierten statistischen 3D-Modellen.

Der Erfindung liegt die Aufgabe zugrunde, ein Verfahren zum Visualisieren und/oder Auswerten von Messdaten aus bildgebenden Verfahren zur Verfügung zu stellen, das eine leistungsfähige Auswertung der gemessenen Daten und insbesondere die Berechnung von Volumenmodellen aus den Messdaten zweidimensionaler Aufnahmen ermöglicht.

Die Erfindung löst diese Aufgabe durch ein Verfahren nach Anspruch 1, dessen Wortlaut hiermit zum Inhalt der Beschreibung gemacht wird, um unnötige Wiederholungen zu vermeiden.

Die Beispielvektoren werden auf der Basis der Beispiel-Voxeldatensätze ermittelt. Zur Ermittlung bzw. Berechnung der Beispielvektoren kann neben einer Reparametrisierung auch eine Parameterreduktion erfolgen.

Bei dem Verfahren werden zur Verarbeitung von Messdaten aus bildgebenden Verfahren aus Beispiel-Voxeldatensätzen ein parametrisiertes statistisches Modell berechnet, Modellparameter für dieses Modell so bestimmt, dass aus dem Modell berechnete Daten optimal mit den gemessenen Daten übereinstimmen, und das so gewonnene Modell zur Visualisierung oder Weiterverarbeitung ausgegeben.

Das erfindungsgemäße Verfahren ermöglicht unter anderem die Berechnung von Volumenmodellen aus zweidimensionalen Aufnahmen (z.B. Röntgenaufnahmen oder einzelnen aufgenommenen Schichtbildern) dadurch, dass mit Hilfe eines aus Beispieldatensätzen generierten statistischen Modells die wahrscheinlichste Konfiguration berechnet wird, die zu der Aufnahme geführt haben könnte. Der Erfahrung des Arztes, der sich eine dreidimensionale Konfiguration vorstellen kann, die zu einer bestimmten Aufnahme geführt hat, entspricht hier die aus den Beispieldaten gewonnene statistische Information. Entsprechende Techniken werden bisher nur auf dem Gebiet der Modellierung zweidimensionaler Bilder [1] oder dreidimensionaler Flächenmodelle (Morphable Models [2]) eingesetzt, nicht aber für Volumenmodelle.

In einer Weiterbildung des Verfahrens wird ein durch die Beispielvektoren aufgespannter Vektorraum reparametrisiert.

In einer Weiterbildung des Verfahrens umfasst das Auswerten des parametrisierten statistischen Modells im Schritt f) eine Detektion von Anomalien in den realen Messdaten, indem Abweichung zwischen den realen Messdaten und den virtuellen Messdaten festgestellt werden.

Das erfindungsgemäße Verfahren oder bestimmte Teilschritte des Verfahrens können bevorzugt auf Spezialhardware, beispielsweise auf der Basis von programmierbaren Logikbausteinen, ausgeführt werden.

Die Erfindung wird nachfolgend anhand typischer Anwendungszenarien und unter Bezugnahme auf die beigefügten Zeichnungen beschrieben. Hierbei zeigen schematisch:

Fig. 1 ein Blockschaltbild einer Vorrichtung zur Erzeugung parametrisier- ter statistischer Volumenmodelle,

Fig. 2 ein Blockschaltbild einer Vorrichtung zur Berechnung eines Volu- menmodells aus einem oder mehreren einfachen Röntgenbildern oder anderen Messdatensätzen und

Fig. 3 ein Blockschaltbild einer Vorrichtung zur Analyse der Modellpara- meter eines parametrisierten statistischen Volumenmodells mit or- thogonalen Basisvektoren aus einem gemessenen vollständigen Datensatz.

Berechnung eines statistischen Volumenmodells aus Beispieldatensätzen

Zur Berechnung des statistischen Volumenmodells werden Beispielvolumendatensätze $V_j$ (j=1..n) benötigt, die alle Objekte der gleichen Objektklasse darstellen. Hier sollen zunächst CT-Voxeldatensätze betrachtet werden, wobei entsprechende Modelle auch für MR-Tomographieaufnahmen erzeugt werden können. Dass die Objekte alle einer gemeinsamen Objektklasse angehören bedeutet, dass zu jedem Objektpunkt in einem Datensatz in jedem anderen Datensatz ein Punkt identifiziert werden kann, der ein entsprechendes Objektmerkmal darstellt. In einem ersten Schritt werden diese Korrespondenzen identifiziert; allgemein wird dieser Schritt als Registrierung der Modelle bezeichnet. Dies kann manuell durch Kennzeichnung korrespondierender Punkte in den Beispieldatensätzen und Interpolation der dazwischenliegenden Punktpositionen erfolgten, aber auch durch automatische Verfahren, siehe z.B. [3] und [4].

Anschließend wird aus jedem Beispieldatensatz ein Vektor $\tilde{B}_j$ berechnet, der den Datensatz vollständig beschreibt und im folgenden als Beispielvektor bezeichnet wird. Der erste dieser Beispielvektoren $\tilde{B}_1$ kann z.B. dadurch erzeugt werden, dass für den ersten der Beispieldatensätze für jedes Voxel x-, y-, und z-Position sowie die Voxelintensität als Vektorkomponenten hintereinandergeschrieben werden, wodurch der Vektor eine Zahl von Komponenten hat, die dem Vierfachen der Voxelzahl entspricht. Für alle weiteren Beispieldatensätze werden die Beispielvektoren dadurch gebildet, dass für jedes Voxel des ersten Beispieldatensatzes das aufgrund der erfolgten Registrierung bekannte korrespondierende Voxel des weiteren Beispieldatensatzes bestimmt wird, und dessen x-, y-, und z-Position sowie dessen Voxelintensität als Vektorkomponenten hintereinandergeschrieben werden. Solcherart erzeugte Vektoren können nun linear kombiniert werden. Die Linearkombinationen stellen neue Volumendatensätze dar, bestehend aus Positionen und Intensitäten. Durch Interpolation und Neuabtastung können aus solchen Linearkombinationen auch wieder regelmäßig abgetastete Voxeldatensätze erzeugt werden.

Die Willkür bei der Zuordnung der Beispielvektorkomponenten zu den Voxeln des beliebig gewählten ersten Beispieldatensatzes lässt sich dadurch entfernen, dass das Berechnungsverfahren wiederholt wird, wobei beim zweiten Durchgang statt des beliebig gewählten ersten Beispieldatensatzes ein aus dem Durchschnittsvektor der Beispielvektoren berechneter Voxeldatensatz zur Korrespondenzberechnung und Beispielvektorgenerierung verwendet wird.

In einem zweiten Schritt wird der durch die Beispielvektoren $\tilde{B}_j$ aufgespannte Vektorraum reparametrisiert. Dazu kann z.B., wie in [2] beschrieben, eine Hauptkomponentenanalyse (PCA) eingesetzt werden. Bei der PCA werden Eigenvektoren und Eigenwerte der Kovarianzmatrix der Beispielvektoren berechnet, nachdem die Koordinaten der Vektoren so transformiert wurden, dass der Durchschnittsvektor $B_0 = \dfrac{1}{n} \sum_{i=1}^{n} \tilde{B}_i$ der Beispielvektoren im Ursprung liegt. Es ist bekannt, dass sich diese für kleine n effizient ohne explizite Berechnung der hochdimensionalen Kovarianzmatrix berechnen lassen. Linearkombinationen der Vektoren können nun als Summe des Durchschnittsvektors $B_0$ und der durch Parameter $a_i$ gewichteten Eigenvektoren $B_i$ der Kovarianzmatrix dargestellt werden, welche somit eine neue Basis für den Vektorraum der Linearkombinationen der Beispielvektoren darstellen. Unter der Voraussetzung, dass die Beispieldatensätze eine höchstens (n-1)-dimensionale Normalverteilung repräsentieren, kann diese Verteilung aus den Beispieldatensätzen geschätzt werden. In diesem Fall repräsentieren die zu den Eigenvektoren gehörenden Eigenwerte der Kovarianzmatrix die Varianz der Projektion der transformierten Beispielvektoren auf die dazu gehörenden Eigenvektoren und werden dazu verwendet, für konkrete Parameterkombinationen die Wahrscheinlichkeit ihres Auftretens zu berechnen.

Falls die Beispielobjekte nicht schon bei der Aufnahme gleich positioniert und ausgerichtet waren, ist es vor Durchführung der Hauptkomponentenanalyse sinnvoll, die in den Beispielvektoren enthaltenen Ortskoordinaten so zu rotieren und zu verschieben, dass Lage und Ausrichtung der Beispielobjekte möglichst gut übereinstimmen. Für die beschriebene Erfindung ist es unerheblich, ob dies manuell oder mit automatischen Verfahren wie Fitting von Momenten geschieht. Besteht ein betrachtetes Objekt aus mehreren Teilobjekten, die relativ zueinander bewegt werden können (wie z.B. mehrere durch Gelenke verbundene Knochen), so sollte diese Ausrichtung für die Teilobjekte getrennt durchgeführt werden. Auch die Parameter dieser Ausrichtungstransformation (z.B. Drehwinkel und Verschiebungsvektoren) können als Vektoren aufgefasst werden, die Lage und Ausrichtung eines Objekts bzw. Lage und Ausrichtung der Teilobjekte beschreiben, und deren Linearkombinationen ebenfalls einen Vektorraum bilden, der auch mit linearen oder nichtlinearen Techniken wie z.B. PCA oder Kernel-PCA reparametrisiert werden kann. Ziel der Reparametrisierung, die auch für Teilobjekte getrennt erfolgen kann, ist die Bestimmung von Parametern, die Kombinationen der Beispielvektoren beschreiben können und zwar in einer solchen Weise, dass diese Parameter nach ihrer Wichtigkeit geordnet werden können. Bei der PCA kann die Wichtigkeit eines Parameters durch den durchschnittlichen quadratischen Fehler definiert werden, der auftritt, wenn bei der Beschreibung der Beispielvektoren im durch die PCA gegebenen Koordinatensystem der entsprechende Parameter weggelassen wird. Parameter, bei denen das Weglassen keinen Fehler bei der Darstellung der Beispielvektoren erzeugt, können weggelassen werden. Die verbleibenden Parameter liefern eine redundanzfreie Darstellung der Beispielvektoren und - wenn diese die Gesamtheit der Volumendatensätze einer Objektklasse gut repräsentieren - auch eine redundanzarme Darstellungsmöglichkeit für Volumendatensätze eines beliebigen neuen Objekts aus der betrachteten Objektklasse.

Hat man nun auf diese Weise ein statistisches Modell gewonnen, so können durch Einstellung der entsprechenden Parameter beliebige Kombinationen der ursprünglichen Beispieldatensätze erzeugt werden. Die dadurch entstehenden Datensätze können mit bekannten Volumenvisualisierungsverfahren visualisiert werden. Beispielsweise ist es sehr einfach, durch Integration entlang der von einer virtuellen Röntgenstrahlenquelle ausgehenden Strahlungslinien aus einem CT-Datensatz ein Bild zu berechnen, das einer normalen Röntgenaufnahme entspricht.

Berechnung eines Volumenmodells aus einer Röntgenaufnahme

Eine wichtige Aufgabe, die mit der beschriebenen Erfindung gelöst werden kann, ist die Berechnung eines Volumenmodells aus einer einfachen Röntgenaufnahme. Dies geschieht in folgender Weise:

a) Das statistische parametrisierte Volumenmodell wird so initialisiert, dass das Durchschnittsobjekt dargestellt wird. Normalerweise wird die Parametrisierung so gewählt sein, dass das Durchschnittsobjekt dadurch repräsentiert wird, dass alle Parameter $a_i$ den Wert 0 haben. Alternativ kann ein initialer Parametersatz manuell festgelegt werden.

b) Von diesem Modell mit den eingestellten Parametern $a_i$ wird eine virtuelle Röntgenaufnahme erzeugt. Die Darstellungsparameter (Position der Strahlungsquelle und Position und Ausrichtung der Bildebene) sollen ähnlich wie bei der zu analysierenden normalen Röntgenaufnahme gewählt werden.

c) Die virtuell erzeugte Röntgenaufnahme wird mit der realen normalen Röntgenaufnahme verglichen. Als Vergleichsmaß kann z.B. die Summe der quadrierten Intensitätsdifferenzen dienen.

d) Nun wird in iterativer Weise durch wiederholtes Durchlaufen der Schritte 2 und 3 mit veränderten Modellparametern $a_i$ und Visualisierungsparametern (Position von Bildebene und Strahlenquelle) die Übereinstimmung zwischen virtuell erzeugtem und realem Röntgenbild verbessert. Für die Anpassung der Parameter können dabei verschiedene numerische Standardoptimierungstechniken eingesetzt werden wie z.B. verschiedene hierarchische gradientenbasierte Verfahren, Simulated-Annealing oder Simplex-Verfahren [5].

Dieses Vorgehen entspricht einem Analysis-by-Synthesis-Verfahren, wie es z.B. für die Analyse von zweidimensionalen Bildern bekannt ist [6].

Ergebnis des Verfahrens ist ein Satz von Modellparametern, die das spezielle, durch das statistische parametrisierte Volumenmodell darstellbare Volumenmodell charakterisieren, das am besten zu der analysierten realen Röntgenaufnahme passt. Dieses Modell kann nun mit Standardvisualisierungstechniken dargestellt werden, z.B. ist es möglich, es von allen Seiten zu betrachten. Verbessert werden kann das Verfahren, wenn statt einer einzelnen realen Röntgenaufnahme zwei oder mehrere Aufnahmen verwendet werden. Das Modell muss in der Analysephase dann so angepasst werden, dass beide Aufnahmen mit den ihnen entsprechenden virtuellen Aufnahmen übereinstimmen. Dazu kann in Schritt 3 als Vergleichsmaß die Summe der quadrierten Intensitätsdifferenzen zwischen jedem der betrachteten aufgenommenen Bilder und dem ihm entsprechenden berechneten Bild verwendet werden. Die restlichen Schritte bleiben unverändert.

Grundsätzlich kann mit Hilfe des statistischen Modells das aufgrund der Beispieldatensätze plausibelste Modell berechnet werden, das zu bestimmten Aufnahmen geführt hat. Ist eine Übereinstimmung in bestimmten Bildbereichen nicht zu erzielen, so liegt der Grund darin, dass kein Modell, das sich als Kombination der Beispieldaten darstellen lässt, ein Bild erzeugen kann, das dem aufgenommenen Bild entspricht. Bereiche, in denen hohe Differenzen auftreten, können z.B. farblich markiert werden, da sie vom Normalen abweichende Gegebenheiten darstellen. Ähnliches gilt, wenn einzelne Modellparameter Größen annehmen, die weit außerhalb der durch die Beispieldaten gegebenen Varianz liegen.

Werden für die Berechnung des statistischen Modells multimodale Beispieldatensätze verwendet, so ergeben sich weitere Einsatzmöglichkeiten für die Analyse aufgenommener Daten. Enthält der Beispieldatensatz neben CT-Daten z.B. auch verschiedene MR-Daten, so kann aus einem Röntgenbild nicht nur ein CT-Datensatz bestimmt werden, der zu diesem Röntgenbild passt, sondern es stehen automatisch auch die dazu am plausibelsten passenden MR-Daten zur Verfügung.

Das für Röntgenbilder beschriebene Analyseverfahren kann nicht nur für normale Röntgenbilder angewendet werden, sondern für alle Darstellungen, die sich aus dem parametrisierten Modell berechnen lassen. Anstelle einer Röntgenaufnahme kann also z.B. auch ein einzelner CT-Schnitt verwendet werden. Das dazu passende Modell wird wie für die Röntgenbilder beschrieben bestimmt und stellt das Modell dar, das nach der durch die Beispieldaten gegebenen Statistik am besten zu diesem Schnitt passt. Eine weitere sehr wichtige Anwendung besteht in der Analyse von Rohdaten, wie sie bei der CT-Aufnahme anfallen. Da auch solche Darstellungen aus Volumendaten berechnet werden können, ist es möglich, auch aus einer kleineren Menge von aufgenommenen Daten qualitativ hochwertige CT-Bilder zu berechnen, ohne die inverse Radontransformation (gefilterte Rückprojektion) durchzuführen. Beachtet werden muss hier lediglich, dass die Beispieldatensätze genügend Variation aufweisen müssen, um die Gegebenheiten richtig darstellen zu können. Ist dies nicht der Fall, so kann immerhin eine Abweichung der Messdaten von den aus dem Modell abgeleiteten Daten detektiert und getrennt behandelt werden.

## Analyse vollständiger Volumendatensätze

Auch die Analyse vollständiger Volumendatensätze ist sinnvoll. Sie erfolgt durch Registrierung, wie sie bei der Erstellung des statistischen Modells eingesetzt wird. Bei linearen Vektorräumen und einer Parametrisierung durch PCA ist die Parameterbestimmung besonders einfach und erfolgt durch einfache Projektion der entstehenden Vektoren auf die durch die PCA bestimmten Hauptachsen und Subtraktion der Projektionen des Durchschnittsvektors der Beispielvektoren auf diese Hauptachsen.

Ist das parametrisierte statistische Modell kein lineares Modell mit orthogonalen Basisfunktionen, sondern wurde z.B. mit Hilfe nichtlinearer Parameterreduzierungstechniken erzeugt, so kann ein vollständiger Volumendatensatz auch mit dem oben beschriebenen Verfahren zur Berechnung eines Volumenmodells aus einer Röntgenaufnahme analysiert werden, wenn anstelle der Röntgenaufnahme der vollständige zu analysierende Datensatz verwendet wird. Der Schritt der Berechnung einer virtuellen Aufnahme kann hier entfallen, da der gemessene Volumendatensatz direkt mit dem aus den Modellparametern erzeugten Volumendatensatz verglichen werden kann.

Ist das statistische Modell multimodal, so kann mit den so bestimmten Parametern auch die jeweils andere Modalität erzeugt werden; aus MR-Daten lässt sich eine CT -Darstellung berechnen und umgekehrt. Allerdings muss beachtet werden, dass diese Darstellung nur ein plausibles Modell und nicht eine Messung darstellt. Besonders interessant ist die Anwendung in der Diagnostik von Anomalien, da diese sich in starken Abweichungen der gemessenen Daten von den Modelldaten ausdrücken. Mit gelabelten Beispieldaten wäre es sogar möglich, durch die Parameterbestimmung für gemessene Daten eine automatische Zuordnung zu bestimmten Gruppen vorzunehmen (Geschlecht, Alter, bestimmte Krankheiten). Für solche diagnostischen Zwecke würden sich allerdings andere Parametrisierungen anbieten; so sollte zur Unterscheidung zweier Gruppen (z.B. bestimmte Krankheit vorhanden / nicht vorhanden) statt der Hauptkomponentenanalyse eine Diskriminanzanalyse vorgenommen werden.

## Vorrichtung zur Erzeugung eines parametrisierten statistischen Volumenmodells

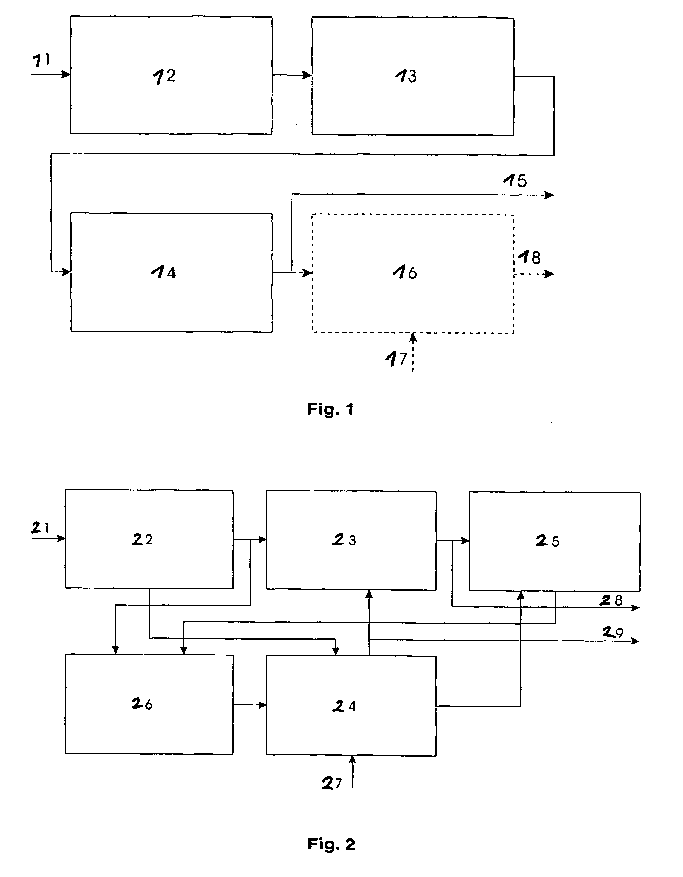

Fig. 1 zeigt beispielhaft das Blockschaltbild einer Vorrichtung zur Erzeugung parametrisierter statistischer Volumenmodelle.

Über einen Eingabeport 11 werden Beispiel-Voxeldatensätze $V_j$ (j=1..n) einer Objektklasse in eine Speichereinheit 12 für Beispiel-Voxeldatensätze geladen. Von dort werden die Beispiel-Voxeldatensätze an eine Verarbeitungseinheit 13 zur Registrierung und Beispielvektorberechnung weitergegeben, wo Punktkorrespondenzen zwischen den Datensätzen bestimmt werden, und anschließend aus diesen Korrespondenzen für jeden Beispiel-Voxeldatensatz ein Beispielvektor berechnet wird.

Dann wird der Durchschnittsvektor

$$B_0 = \frac{1}{n}\sum_{i=1}^{n}\tilde{B}_i$$ aller Beispielvektoren bestimmt, und anschließend von jedem Beispielvektor abgezogen. Die resultierenden Differenzvektoren $B_i = \tilde{B}_i - B_0$ werden an eine Verarbeitungseinheit 14 zur Reparametrisierung durch PCA weitergegeben, wo sie einer Hauptkomponentenanalyse unterzogen werden. Als Ergebnis steht ein parametrisiertes statistisches Volumenmodell zur Verfügung, das aus dem Vektor $P_0 = B_0$ und den Eigenvektoren $P_i$ der Kovarianzmatrix der Differenzvektoren, sowie aus den dazugehörigen Eigenwerten $v_i$ besteht. Dieses Modell kann über einen Ausgabeport 15 ausgegeben werden, oder an eine Verarbeitungseinheit 16 zur Generierung eines Voxelmodells für bestimmte Parameter $a_i$ weitergegeben werden, wo aus über einen Eingabeport 17 eingegebenen Parametern $a_i$ und den Modellvektoren $P_i$ der Summenvektor $V_a = B_0 + \sum_i a_i P_i$

berechnet wird, der ein durch die Parameter $a_i$ definiertes

konkretes Volumenmodell repräsentiert. Aus diesem Summenvektor wird anschließend durch Resampling ein Voxelmodell auf einem regelmäßigen Gitter berechnet, das über einen Ausgabeport 18 ausgegeben werden kann.

Vorrichtung zur Bestimmung von Modellparametern aus einem oder mehreren Röntgenbildern oder anderen Messdatensätzen

Fig. 2 zeigt beispielhaft das Blockschaltbild einer Vorrichtung zur Berechnung eines Volumenmodells aus einem oder mehreren einfachen Röntgenbildern oder anderen Messdatensätzen.

Über einen Eingabeport 21 wird ein parametrisiertes statistisches Volumenmodell in Form der Vektoren $P_i$ (i=O..n) und der dazugehörigen Varianzen $v_i$ (i=1..n) sowie die Messdaten M, z.B. in Form eines einfachen Röntgenbildes in eine Speichereinheit 22 für Volumenmodell und Messdaten geladen. Für die folgende Beschreibung wird angenommen, dass die Messdaten M ein einfaches Röntgenbild darstellen. Die Vektoren werden an eine Verarbeitungseinheit 23 zur Generierung eines Voxelmodells für bestimmte Parameter $a_i$ weitergegeben. Diese Verarbeitungseinheit wird von einer Verarbeitungseinheit 24 zur Optimierung der Parameter $a_i$ und der Darstellungsparameter mit Parametern versorgt. Aus diesen und den Vektoren $P_i$ berechnet sie ein Voxelmodell, das an eine Verarbeitungseinheit 25 zur Generierung virtueller Messdaten M' aus einem Voxelmodell weitergegeben wird. In dieser Verarbeitungseinheit, die z.B. aus einem gebräuchlichen Voxelvisualisierungsgerät bestehen kann, und die die Darstellungsparameter auch von der Verarbeitungseinheit 24 zur Optimierung der Parameter $a_i$ und der Darstellungsparameter erhält, wird ein virtueller Messdatensatz M', z.B. ein virtuelles Röntgenbild, erzeugt und an eine Verarbeitungseinheit 26 zur Berechnung eines Ähnlichkeitsmaßes zwischen Messdaten M und virtuellen Messdaten M' weitergegeben. In dieser Verarbeitungseinheit wird das virtuelle Röntgenbild mit dem aufgenommenen zu analysierenden Röntgenbild aus der Speichereinheit 22 verglichen. Dieses Vergleichsmaß wird an die Verarbeitungseinheit 24 zur Optimierung der Parameter und der Darstellungsparameter weitergegeben, wo entsprechend einem Optimierungsalgorithmus in iterativer Weise, beginnend mit einem initialen Parametersatz so lang neue Parameter $a_i$ und neue Darstellungsparameter erzeugt werden, bis das Vergleichsmaß einen Extremwert erreicht, der anzeigt, dass maximal mögliche Übereinstimmung zwischen real aufgenommenem und virtuell erzeugtem Messdatensatz erreicht wurde. Dieser Algorithmus kann auch auf die in der Speichereinheit 22 für Volumenmodell und Messdaten gespeicherten Varianzen zurückgreifen. Die initialen Parameter $a_i$ sind entweder fest eingestellte Standardwerte (z.B. 0) oder können alternativ über einen Eingabeport 27 eingegeben werden. Die initalen Darstellungsparameter sollen den Aufnahmeparametern der Messdaten entsprechen und werden ebenfalls über den Eingabeport 27 eingegeben. Mit mehreren Sätzen von Darstellungsparametern kann die Vorrichtung auch dazu benutzt werden, mehrere Röntgenbilder eines Objektes simultan zu analysieren.

Ist die Iteration zum Abschluss gekommen, so steht an einem Ausgabeport 28 das aus den optimierten Parametern berechnete Voxelmodell zur Verfügung, das mit Standard-Visualisierungsverfahren für Voxelmodelle visualisiert werden kann. Es bietet sich an, für diese Visualisierung eine Vorrichtung zu nutzen, die der Verarbeitungseinheit 25 zur Generierung virtueller Messdaten M' aus einem Voxelmodell entspricht.

An einem Ausgabeport 29 stehen die optimierten Modellparameter zur Verfügung, die das berechnete optimierte Modell sehr kompakt repräsentieren, und auch dazu verwendet werden können, die Plausibilität des berechneten Modells mit Hilfe der durch das statistische Modell gegebenen Wahrscheinlichkeitsverteilung zu bestimmen.

Vorrichtung zur Analyse der Modellparameter eines parametrisierten statistischen Volumenmodells mit orthogonalen Basisfunktionen aus einem gemessenen vollständigen Datensatz

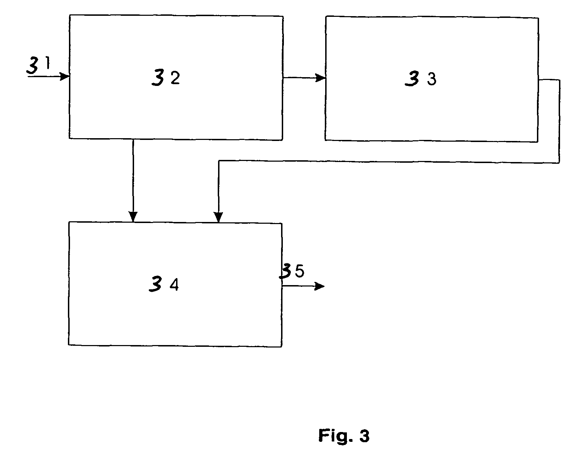

Fig. 3 zeigt beispielhaft das Blockschaltbild einer Vorrichtung zur Analyse der Modellparameter eines parametrisierten statistischen Volumenmodells mit orthogonalen Basisvektoren aus einem gemessenen vollständigen Datensatz.

Über einen Eingabeport 31 wird ein parametrisiertes statistisches Volumenmodell in Form der orthogonalen normierten Vektoren $P_i$ (i=O..n), sowie der gemessene vollständige Volumendatensatz K in eine Speichereinheit 32 für Volumenmodell und Messdaten geladen. Der gemessene vollständige Volumendatensatz K wird anschließend in einer Verarbeitungseinheit 33 zur Registrierung von $K$ mit dem durch den Durchschnittsvektor $P_0$ des parametrisierten statistischen Modells dargestellten Volumendatensatz registriert. Nach dieser Registrierung wird wie bei der Generierung des parametrisierten statistischen Modells aus den Korrespondenzen und den Intensitäten von $K$ ein Vektor berechnet, der den zu analysierenden gemessenen vollständigen Volumendatensatz repräsentiert. Dieser Vektor wird anschließend durch Subtraktion von $P_0$ in das Koordinatensystem des parametrisierten statistischen Modells transformiert. Der so berechnete transformierte Messdatenvektor $V_K$ wird an eine Verarbeitungseinheit 34 zur Berechnung der Modellparameter $a_i$ weitergeleitet, wo die Parameter $a_i$ durch Projektion auf die orthonormalen Basisvektoren $P_i$ des parametrisierten statistischen Volumenmodells berechnet werden. Die so berechneten Parameter $a_i$ werden anschließend über einen Ausgabeport 35 ausgegeben.

Zusammenfassen dient das beschriebene Verfahren zur Verarbeitung von Daten eines Objektes, die mit bildgebenden Verfahren wie z.B. MR-Tomographie, CT, oder einfachen Röntgenaufnahmen gewonnen wurden, durch Erstellung eines parametrisierten statistischen Volumenmodells aus Beispiel-Volumendatensätzen bzw. Beispiel-Voxeldatensätzen und Anpassen der Modellparameter an die gewonnenen Daten. Die Erstellung des parametrisierten statistischen Volumenmodells aus Beispiel-Voxeldatensätzen erfolgt dabei durch manuelle oder automatische Registrierung der Volumen- bzw. Voxeldatensätze, Speicherung der Korrespondenzen als hochdimensionale Vektoren und anschließender Parameterreduktion. Die Beispiel-Voxeldatensätze können semantische Zusatzinformationen, wie sie z.B. durch manuelle Segmentierung erzeugt werden, enthalten. Die Anpassung der Modellparameter an die durch bildgebende Verfahren gewonnenen zu verarbeitenden Daten erfolgt durch Anwendung von Analysis-by-Synthesis-Verfahren. Ergebnis ist ein mit Standardverfahren visualisierbares Volumenmodell des aufgenommenen Objekts auf Basis der Beispieldatensätze. Anwendungen sind z.B. die Erzeugung eines dreidimensionalen Volumenmodells aus einer einzigen oder wenigen einzelnen Röntgenaufnahmen, oder auch die automatische Detektion von außergewöhnlichen Strukturen durch Vergleich der aus dem statistischen Modell berechneten Daten mit den aufgenommenen Volumendaten.

### Weiterentwicklungen

Eine Weiterentwicklung der beschriebenen Verfahren und Vorrichtungen in verschiedenen Hinsichten ist möglich. So können z.B. für die Bestimmung initialer Parametersätze bei der Analyse von Daten ähnlich wie in [6], Machine-Learning-Verfahren eingesetzt werden.

### Referenzen

[1] T.F. Cootes, G.J. Edwards, and C.J. Taylor. Active appearance models. In Burkhardt and Neumann, editors, Computer Vision - ECCV'98Vol. II, Freiburg, Germany, 1998. Springer, Lecture Notes in Computer Science 1407.

[2] V. Blanz, T. Vetter. Method and device for the processing of images based on morphable models, EP1039417.

[3] D. L. Collins, P. Neelin, T. M. Peters, and A. C. Evans, "Automatic 3D intersubject registration of MR volumetric data in standardized Talairach space," Journal of Computer Assisted Tomography, Vol. 18, pages 192-205.

[4] J. Modersitzki. Numerical Methods for Image Registration. Numerical Mathematicsand Scientific Computation. Oxford University Press (2004).

[5] James C. Spall. Introduction to Stochastic Search and Optimization, ISBN: 0471330523,Wiley-Interscience, 2003.

[6] A. Schilling. Introduction to Analysis by Synthesis Methods, in: H.Bülthoff, H. Mallot, R. Ulrich, F. Wichmann (Hrg.), Proceedings of TWK05: 8th Tübingen Perception Conference, Feb. 2005, Symposium 1 Symposium 1: Analysis by Synthesis Methods in Computer Vision and Perception, 2005.

[7] Cris Curio. Analysis by Synthesis for Human Pose Tracking: Merging View-Based and Model-Based Approaches, in: H.Bülthoff, H. Mallot, R. Ulrich, F. Wichmann (Hrg.), Proceedings of TWK05: 8th Tübingen Perception Conference, Feb. 2005, Symposium 1 Symposium 1: Analysis by Synthesis Methods in Computer Vision and Perception, 2005.

### Patentansprüche

**1.** Verfahren zum Visualisieren und/oder Auswerten von Messdaten aus bildgebenden Verfahren, mit den Schritten:

a) Berechnen eines parametrisierten statistischen Modells aus Beispiel-Voxeldatensätzen mit CT- und/oder MR-Voxeldaten, die unterschiedliche Objekte einer identischen Objektklasse abbilden, wobei das parametrisierte statistische Modell aus Linearkombinationen von Beispielvektoren gewonnen wird, wobei ein jeweiliger Beispielvektor einem jeweils zugehörigen Beispiel-Voxeldatensatz zugeordnet ist und Komponenten des jeweiligen Beispielvektors Position und Intensität der Volumenelemente des zugehörigen Beispiel-Voxeldatensatzes beschreiben,
b) Durchführen mindestens eines bildgebenden Verfahrens an einem zu untersuchenden Objekt der Objektklasse zum Gewinnen von realen Messdaten,
c) Einstellen eines Satzes von konkreten Parametern des parametrisierten statistischen Modells,

c1) Berechnen von virtuellen Messdaten aus dem parametrisierten statistischen Modell mit dem eingestellten Satz von konkreten Parametern,

d) Bestimmen der Abweichung zwischen den realen Messdaten und den virtuellen Messdaten,
e) Wiederholen der Schritte c), c1) und d) unter Veränderung des Satzes der konkreten Parameter, bis die Abweichung zwischen den realen Messdaten und virtuellen Messdaten minimal ist, und
f) Visualisieren und/oder Auswerten des parametrisierten statistischen Modells in Abhängigkeit von dem in Schritt e) gefundenen veränderten Satz von Parametern,

**dadurch gekennzeichnet, dass**

- die Messdaten in Schritt b) entweder

- anhand einer oder mehrerer Röntgenaufnahmen,
- oder aus noch nicht rückprojizierten Daten einer oder mehrerer CT-Aufnahmen,
- oder anhand eines unvollständigen Satzes von CT- oder MR-Schnitten gewonnen werden.

**2.** Verfahren nach Anspruch 1, **dadurch gekennzeichnet, dass** ein durch die Beispielvektoren aufgespannter Vektorraum reparametrisiert wird.

**3.** Verfahren nach Anspruch 1 oder 2, **dadurch gekennzeichnet, dass** das Auswerten des parametrisierten statistischen Modells im Schritt f) eine Detektion von Anomalien in den realen Messdaten umfasst, indem Abweichung zwischen den realen Messdaten und den virtuellen Messdaten festgestellt werden.

**Claims**

**1.** Method for visualizing and/or evaluating measured data from imaging methods, having the steps of:

a) calculating a parameterized statistical model from exemplary voxel data records with CT and/or MR voxel data which image different objects of an identical object class, the parameterized statistical model being obtained from linear combinations of exemplary vectors, a respective exemplary vector being assigned to a respectively associated exemplary voxel data record, and components of the respective exemplary vector describing the position and intensity of the volume elements of the associated exemplary voxel data record,
b) carrying out at least one imaging method on an object, to be investigated, of the object class in order to obtain real measured data,
c) compiling a set of concrete parameters of the parameterized statistical model,

c1) calculating virtual measured data from the parameterized statistical model with the aid of the compiled set of concrete parameters,

d) determining the deviation between the real measured data and the virtual measured data,

e) repeating steps c), c1) and d) while changing the set of concrete parameters until the deviation between the real measured data and virtual measured data is minimal, and
f) visualizing and/or evaluating the parameterized statistical model as a function of the changed set of parameters found in step e),

**characterized in that**

- the measured data are obtained in step b) either

- with the aid of one or more X-ray images,
- or from data of one or more CT images, which data have not yet been backprojected,
- or with the aid of an incomplete set of CT or MR sections.

**2.** Method according to Claim 1, **characterized in that** a vector space defined by the exemplary vectors is reparameterized.

**3.** Method according to Claim 1 or 2, **characterized in that** the evaluation of the parameterized statistical model in step f) comprises the detection of anomalies in the real measured data by determining deviation between the real measured data and the virtual measured data.

**Revendications**

**1.** Procédé de visualisation et/ou d'interprétation de données de mesure à partir d'un procédé d'acquisition d'image, comprenant les étapes suivantes :

a) Calcul d'un modèle statistique paramétré d'exemples de jeux de données de voxel comprenant des données CT et/ou MR de voxel qui représentent des objets différents d'une même classe d'objet, le modèle statistique paramétré étant obtenu à partir de combinaisons linéaires d'exemples de vecteurs, un exemple de vecteur donné étant affecté à un exemple de jeux de données de voxel associé correspondant et les composants de l'exemple de vecteur donné décrivant la position et l'intensité des éléments de volume de l'exemple de jeux de données de voxel associé,
b) Exécution d'au moins un procédé d'acquisition d'image sur un objet à examiner de la classe d'objet afin d'obtenir des données de mesure réelles,
c) Réglage d'un jeu de paramètres concrets du modèle statistique paramétré,

c1) Calcul de données de mesure virtuelles à partir du modèle statistique paramétré avec le jeu réglé de paramètres concrets,

d) Détermination d'un écart entre les données de mesure réelles et les données de mesure virtuelles,

e) Répétition des étapes c), c1) et d) en modifiant le jeu de paramètres concrets jusqu'à ce que l'écart entre les données de mesure réelles et les données de mesure virtuelles soit minimum, et

f) Visualisation et/ou interprétation du modèle statistique paramétré en fonction du jeu de paramètres modifié découvert à l'étape e),

**caractérisé en ce que**

- les données de mesure à l'étape b) sont obtenues

- soit au moyen d'un ou plusieurs enregistrements radiographiques,
- soit à partir de données pas encore rétroprojetées d'un ou plusieurs enregistrements CT, soit au moyen d'un jeu incomplet de coupes CT ou MR.

2. Procédé selon la revendication 1, **caractérisé en ce qu'**un espace vectoriel défini par les exemples de vecteurs est de nouveau paramétré.

3. Procédé selon la revendication 1 ou 2, **caractérisé en ce que** l'interprétation du modèle statistique paramétré à l'étape f) comprend une détection d'anomalies dans les données de mesure réelles sous la forme d'une détermination de l'écart entre les données de mesure réelles et les données de mesure virtuelles.

**Fig. 1**

**Fig. 2**

**Fig. 3**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1039417 A

**In der Beschreibung aufgeführte Nicht-Patentliteratur**

- **HILL, A. ; THORNHAM, A. ; TAYLOR, C.J.** Model-Based Interpretation of 3D Medical Images. *PROCEEDINGS OF THE 4TH BRITISH MACHINE VISION CONFERENCE,* 23. September 1993
- **FLECK, S. ; BIBER, P. ; SCHILLING, A.** Direct Estimation of Pose and Illumination - An Analysis by Synthesis Approach. *PROCEEDINGS OF THE 7TH TÜBINGEN PERCEPTION CONFERENCE,* 01. Februar 2004, 66 ff
- Active Appearance Models. **T.F. Cootes et al.** Lecture Notes in Computer Sciene (LNSC). Springer Verlag, 1998, vol. 1407, 484-498
- **D. Rueckert ; A.F. Frangi ; J.A. Schnabel.** Automatic Construction of 3-D Statistical Deformation Models of the Brain Using Nonrigid Registration. *IEEE Transactions on Medical Imaging,* August 2003, vol. 22 (8
- Active appearance models. **T.F. Cootes ; G.J. Edwards ; C.J. Taylor.** Computer Vision - ECCV'98Vol. II, Freiburg, Germany. Springer, Lecture Notes in Computer Science, 1998, 1407
- **D. L. Collins ; P. Neelin ; T. M. Peters ; A. C. Evans.** Automatic 3D intersubject registration of MR volumetric data in standardized Talairach space. *Journal of Computer Assisted Tomography,* vol. 18, 192-205
- Numerical Methods for Image Registration. **J. Modersitzki.** Numerical Mathematicsand Scientific Computation. Oxford University Press, 2004
- **James C. Spall.** Introduction to Stochastic Search and Optimization. Wiley-Interscience, 2003
- Introduction to Analysis by Synthesis Methods. **A. Schilling.** Proceedings of TWK05: 8th Tübingen Perception Conference. Februar 2005
- Analysis by Synthesis for Human Pose Tracking: Merging View-Based and Model-Based Approaches. **Cris Curio.** Proceedings of TWK05: 8th Tübingen Perception Conference. Februar 2005